Europäisches Patentamt

(19) European Patent Office

Office européen des brevets

(11) Publication number: **0 201 944**
**B1**

## (12) EUROPEAN PATENT SPECIFICATION

(45) Date of publication of the patent specification:
**07.03.90**

(51) Int. Cl.⁴: **G02B 6/38**

(21) Application number: **86200448.8**

(22) Date of filing: **25.05.83**

(60) Publication number of the earlier application in accordance with Art. 76 EPC: **0096511**

(54) Connector for terminating an optical fibre.

(30) Priority: **05.06.82 GB 8216433**

(43) Date of publication of application:
**20.11.86 Bulletin 86/47**

(45) Publication of the grant of the patent:
**07.03.90 Bulletin 90/10**

(84) Designated Contracting States:
**BE DE FR GB IT NL**

(56) References cited:
**DE-A- 2 507 158**
**DE-A- 2 531 994**
**US-A- 3 768 146**
**US-A- 4 325 607**

(73) Proprietor: **AMP INCORPORATED, P.O.**
**Box 3608 470 Friendship Road, Harrisburg**
**Pennsylvania 17105(US)**

(72) Inventor: **ten Berge, Eduardus Franciscus Antonius,**
**14 Hobbemaplein, NL-5151 SL Drunen(NL)**

(74) Representative: **Warren, Keith Stanley et al, BARON &**
**WARREN 18 South End Kensington, London**
**W8 5BU(GB)**

## Description

This invention relates to an optical fibre termination technique and product which is useful in the provision of releasable fibre optic connections.

It is known to terminate optical fibres by ferrule members at which optically flat exposed fibre ends may be formed to facilitate concentric seating in a bore of an alignment member adapted to be engaged by aligned optical fibre terminations at opposite ends, and thereby install a disconnectable optical fibre connection. Reference is made, for example, to AMP Incorporated US Patent Specification 3 999 837.

It has also been proposed by GTE Laboratories in Technology News EDN 20 August 1980, to provide a releasable two-part connector in each part of which a short length of optical fibre has one end centered in a bushing and the other end disposed in an elastomeric splice ferrule adapted to receive the end of an optical fibre in abutting relationship with the other end of the short fibre in a permanent connection. The arrangement is such that the bushings of the two parts are brought into engagement with the one ends of the short fibre lengths in aligned face-to-face abutting relationship at an interface between the bushings.

It has also been proposed to interconnect or splice optical fibres by aligning end portions in a bore of a deformable alignment member and to deform the member about the fibres to secure them in aligned juxtaposition.

It is an object of the invention to present an improved connector for terminating an optical fibre, and in particular, for use in accordance with the teachings of EP-A 96 511 from which the application is divided.

According to the invention of EP-A 96 511 a method of making an optical fibre terminal comprises an optical fibre length for terminating an optical fibre by splicing in optical alignment therewith, which comprises forming a short length of fibre within a coating and thereafter providing the short fibre length with an optical surface, characterised by forming a length of optical fibre with an initial thin electroless metallic coating of uniform thickness and a subsequent relatively thick electroplated coating of uniform thickness, cutting the short length from the metallic coated fibre to form a short needle-like length coated throughout the length and between the opposite ends thereof, and providing the opposite ends of the coated short length with optical surfaces. This enables a fibre to be terminated by means of which can more readily be connected in the field than can a plain fibre.

Suitably, after forming the optical surfaces, part of the coating is removed over an end portion of the coated length to define a reduced diameter end portion which is spliced to the fibre to be terminated. This facilitates alignment of the spliced ends of the coated length and the fibre to be terminated by matching the diameter of the spliced portions more closely.

The invention of EP-A 0 096 511 includes an optical fibre terminal formed by the method of the invention and spliced at one end to and in optical alignment with an extended length of relatively flexible optical fibre, and at the other end projecting from the splice as a rigid optical needle.

For forming the splice between the fibre to be terminated and the short fibre length there are available many known techniques and devices. If the splice is to be formed under factory or laboratory conditions, a fusion or welding technique is appropriate to give a low loss splice connection. However such splice joints require expensive tooling and skilled workmanship and are generally not suitable or economic for field application.

A suitable technique for field application is the crimp technique in which ends of the fibre to be terminated and of the short fibre length are aligned within an alignment bore of a deformable alignment body contained within a metal crimping sleeve. Crimping to effect radial compression of the sleeve secures the fibre ends in alignment.

As claimed in EP-A 96 511 an optical fibre terminated by a short fibre length made by the method of the invention is characterised in that the relatively rigid coated fibre length and the fibre to be terminated are aligned in a deformable alignment body having an alignment passageway in which the coated length and the fibre to be terminated are disposed end to end, the alignment body being contained within a metal crimping sleeve which is radially crimped resiliently to deform the alignment body about the abutted ends of the coated length and the length to be terminated, the relatively rigid coated length projecting from the alignment body.

According to the present invention a connector for terminating an optical fibre comprising a tubular crimping sleeve containing a resiliently deformable elongate alignment body having a central alignment passage for optical fibres is characterised in that the crimping sleeve extends beyond the alignment body at opposite ends and a support bushing having a central fibre passageway is disposed within each end of the sleeve adjacent the alignment body, each support bushing having a peripheral recess whereby on crimping the sleeve about the alignment body and the bushings the sleeve may be indented into the recesses to secure the bushings in abutment with opposite ends of the alignment body thereby placing the alignment body under axial constraint.

When used with the coated fibre of EP-A 96 511 the crimping sleeve extends beyond the alignment body at opposite ends around support bushings, one at each end, the bushings having axial passageways for the coated fibre and the terminated fibre, respectively and engaging and axially constraining opposite ends of the alignment member under compression, indentations in the crimping sleeve securing the support bushings against movement apart, and the coated fibre projecting from the associated support bushing.

Preferably the coated fibre has a relatively thick coating over that portion projecting from the alignment body and a relatively thin coating over that portion within the alignment body.

Suitably the alignment body is formed of material selected from the group comprising eutectic leadtin alloy, super-plastic zinc, aluminium of grain size of the order of 30 μm, super-plastic aluminium having a grain size of the order of 5 μm, and EPDM rubber, and the bushings may be of malleable metal such as brass.

The invention also includes a fibre optic female connector comprising a connector according to the invention characterised in that the crimping sleeve at one end extends beyond the support bushing whereby a coated optical fibre may be mounted in the fibre passageway of that support bushing, the coated fibre projecting on opposite sides of the support bushing, one end projecting coaxially into the sleeve extension and the other projecting into the alignment passageway of the alignment body, and including a resilient alignment member for mounting in the sleeve extension and having an alignment passageway for embracing the end of the coated fibre within the sleeve extension the alignment member resiliently engaging the coated fibre and having an alignment passageway portion extending away therefrom for reception of a complementary coated fibre.

An alignment member may be resilient, for example, folded from sheet metal to define an alignment passageway of lesser diameter than that of the fibre ends to be inserted but having resilient wall parts which may be sprung apart on insertion of the fibre ends.

For use in a connector housing the terminated fibre is suitably mounted in a spring loaded carrier having latching means for latching the carrier in the housing, and spring loading means arranged to be compressed on engagement of the connector housing with a complementary housing and to bias the projecting end of the coated fibre length axially towards a complementary aligned fibre end in a complementary housing through an intermediate alignment member.

Suitably the spring loading means is provided in only one of the connector housings.

The invention will now be described, by way of example, with reference to the accompanying partly diagrammatic drawings, in which:

Figure 1 is a fragmentary exploded view of a connector assembly for terminating a pair of optical fibres and releasably connecting the terminated ends;

Figure 2 is a perspective view to an enlarged scale of an intermediate short fibre length of the assembly of Figure 1;

Figure 3 is a perspective exploded view of a crimp splice;

Figure 4 is a perspective view of the assembled splice of Figure 3;

Figure 5 is a sectional side elevation of a fibre optic termination suitable for assembly in a connector housing for mating with a complementary connector;

Figure 6 is a fragmentary sectional elevation of part of a multi-way connector housing for the termination of Figure 5;

Figure 7 is an end view of a spring form alignment member for use in a connector of the kind shown in Figures 5 and 6, or assembly of Figure 1;

Figure 8 is a sectional perspective view of a male contact according to the invention;

Figure 9 is a view similar to that of Figure 8 of the male contact assembled into a male connector;

Figure 10 is a sectional perspective view of a female contact according to the invention;

Figure 11 is a view similar to that of Figure 10, but viewed from the opposite side, assembled into a female connector.

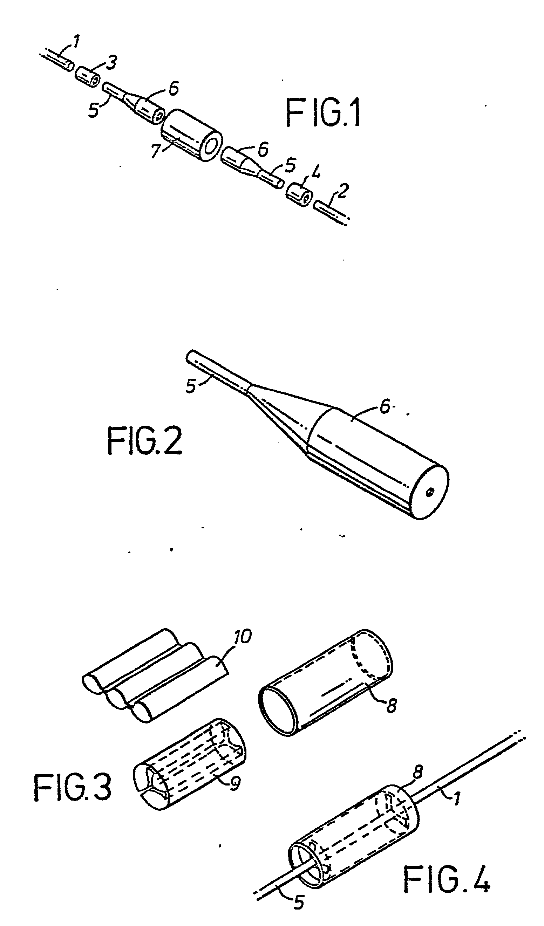

In the arrangement of Figure 1, optical fibres 1 and 2 are arranged for insertion into rear ends of splice ferrules 3, 4 which are at their other ends are arranged to receive the rear, reduced diameter ends 5 of coated intermediate, short fibre lengths 6. The forward larger diameter ends of the coated fibre lengths 6 are axially insertable with a close fit into opposite ends of an alignment member having a through passageway within which the ends of the lengths 6 may abut.

The intermediate short fibre lengths 6 are, as shown in Figure 2, formed with a metallic coating which has been etched away at the rear end 5 to reduce the diameter to that of the fibre 1 to which it is to be spliced. As has been described above, both ends of the fibre length 6 are suitably formed with optical surface before the etching process.

The enlarged forward end of fibre 6 is of suitably controlled length so the position of the forward face may be accurately determined by location of its rear end.

The splice assembly of Figure 3 comprises a cylindrical crimping ferrule 8 adapted to contain a deformable alignment member 9 formed from a deformable plastics extrusion 10, folded up to define an axial through passageway, and radially extending voids for accommodating circumferential deformation of the plastics. In use, as shown in Figure 4, the member 9 is contained within the ferrule and the end of a fibre length 1 inserted axially from one end to abut the end of the reduced portions 5 of a short coated fibre length 6 before reducing the ferrule 8 by crimping to secure the ends in the splice. During crimping axial forces are suitably applied to opposite ends of the alignment member 9, by use of a suitable tool, to resist longitudinal extrusion of the alignment member 9, and axial movement of the fibre ends apart.

The splice of Figures 3 and 4 and its method of assembly, is more fully disclosed in and forms the subject of our European patent application EP 81306159.5, publication No. 0056196, published 21 July 1982.

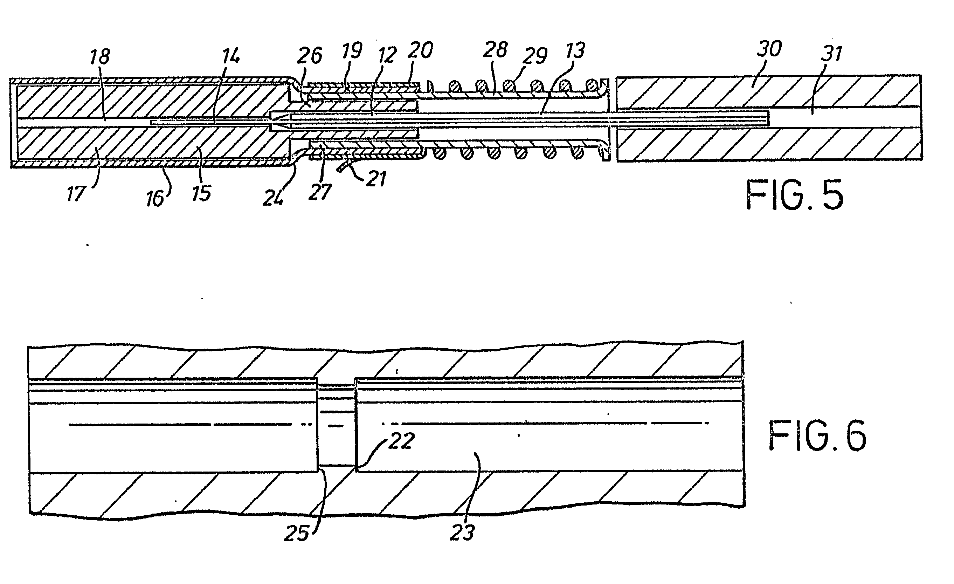

In Figure 5, a coated fibre length 12, formed generally as shown in Figure 2, with an enlarged diameter forward portion 13 and a reduced diameter tail 14, is positioned with the tail 14 extending into the through passageway of a crimp-splice assembly 15. The assembly 15 comprises an outer metal crimping ferrule 16 containing a deformable member 17 having a through passageway 18 for reception of the tail 14, at one end, and an optical fibre to be terminated, at the other, to be secured by crimping the ferrule 16.

The ferrule 16, at its forward end has an extension 19 slidably received within a latch collar 20 having a latch 31 for latching the assembly in the housing of Figure 6 by engagement with a shoulder 22 in the passage 23 thereof. The forward end 24 of the ferrule presenting a shoulder for engaging housing abutment 25.

A forward extension 26 of the deformable plastics member 17, of reduced diameter, supports the rear end of the enlarged diameter portion 13 of the fibre length 12, and presents an annular space 27 within the ferrule extension 19, which receives a rear end of a metal sleeve 28 carrying a biasing spring 29 acting against the forward end of the collar 20 and biasing the sleeve 28 and with it the fibre portion 13 forwards. The fibre portion 13 projects through the sleeve 28 and forwardly into one end of an alignment member 30 having a through passageway 31 within which the fibre portion 13 is a close fit. The fibre portion terminates approximately mid-way through the passageway 31 to leave a residual passageway portion for receipt of a projecting fibre portion of a complementary connector, not shown.

After the assembly of Figure 5 has been spliced to an optical fibre at the crimp-splice assembly 15, it is inserted into the housing passageway of Figure 6, from left to right, to register the ferrule shoulder 24 with the housing shoulder 25, to engage the latch 21 with the abutment 22. The alignment member is assembled from the right of Figure 6 to abut the forward end of the sleeve 28 and receive the forward portion of the coated fibre 13 within its passageway 31.

A complementary connector is generally similar, but the alignment member is omitted, and suitably also the biasing spring. Thus a coated fibre length projects forwardly from a mating face of the complementary connector and on mating engagement of the two connectors the complementary coated fibre penetrates the residual passageway portion 31 of the alignment member, to abut the end of the fibre portion 13.

Suitably the alignment bushing displaces the sleeve 28 to the left against the bias of the spring 29 to ensure that the abutted fibre ends are biased together by the spring force.

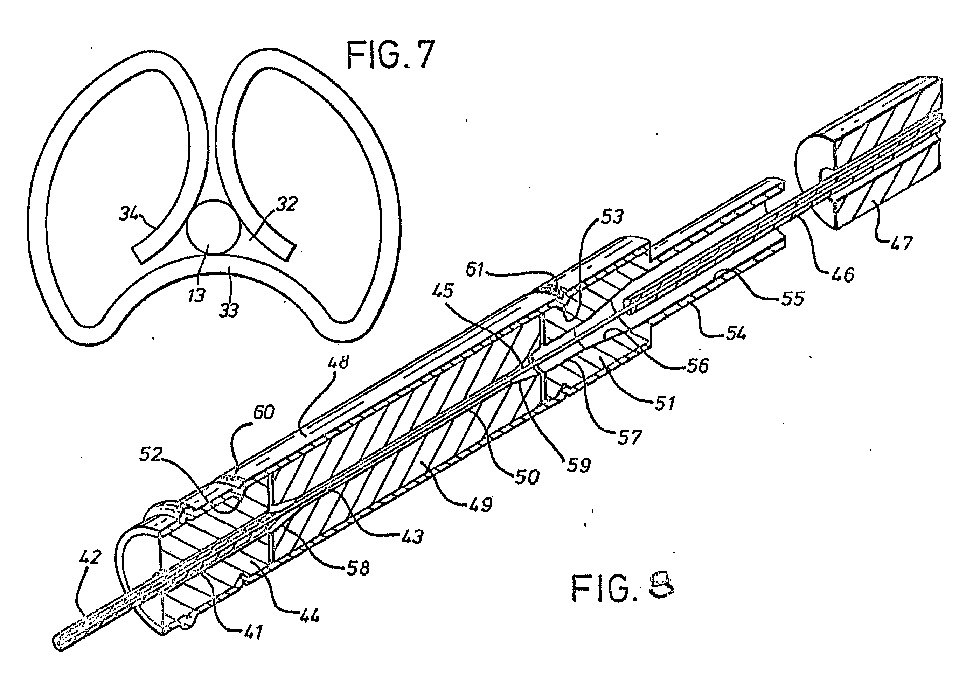

The alignment member 30 may be formed as shown in Figure 7 as a spring member folded from sheet metal to define an axial passageway 32 encompassed on three sides by an arcuate base 33 and a pair of arcuate spring arms 34, convex inwards to define the passageway 32 of generally triangular section for receiving the fibre portion 13 in a spring fit.

Suitably, at opposite ends of the alignment member the base 33 and spring arms 34 are formed radially outwards of the passageway 32 to define flared entrance sections to facilitate axial insertion of the coated fibre ends.

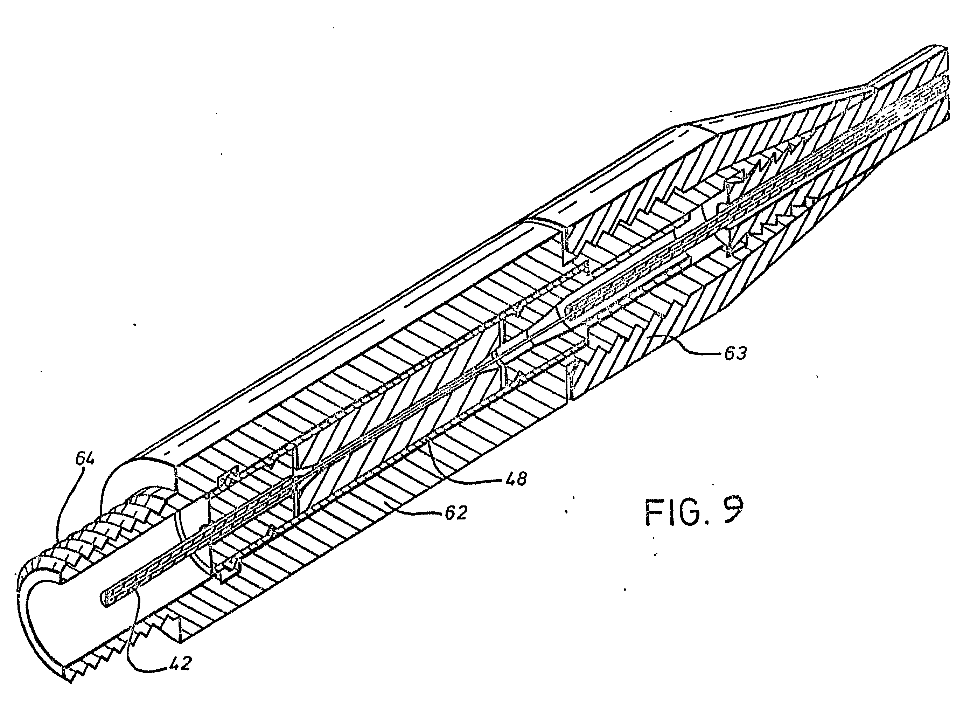

The male optical fibre connector of Figure 8 represents an embodiment of the invention and comprises a short metal coated fibre length 41, corresponding to that shown in and described in connection with Figure 2, and for concise identification, hereinafter referred to as an optical needle. The optical needle 41 comprises a forward portion 42 of enlarged diameter compared to a rearward portion 43, the forward portion 42 being supported coaxially in and projecting forwardly from a support bushing 44, and the rearward portion 43 being spliced to axial alignment with the stripped forward end 45 of an optical fibre 46 extending from its cable covering 47.

The splice is formed generally as described with reference to Figures 3 and 4, but is further improved. The splice comprises an outer metal sleeve 48 containing in a middle portion an alignment member 49, generally of the form disclosed in Figure 3 and folded to define an axial through passageway 50 accommodating the rearward portion 43 of the optical needle 41 and the stripped forward end 45 of the optical fibre 46. The sleeve 48 extends forwardly and rearwardly beyond the alignment member 49, and in its forward extension, accommodates the support bushing 44 coaxially with the alignment member, and at its rearward extension, accommodates a fibre support bushing 51 in similar manner. The support bushings 44 and 51 abut forward and rearward ends of the alignment member 49 and adjacent the abutting ends are formed with respective external annular grooves 52 and 53 of generally V-form.

The fibre support bushing 51 has a rearward extension 54 of reduced diameter, surrounding the optical fibre 46 with an enlarged bore 55 progressively reducing at a convergent portion 56 to a reduced diameter portion 57 adjacent the alignment member 49.

The through passageway 50 defined by the folded alignment member 49 has flared entry portions 58, 59 at opposite ends, to facilitate entry of the optical needle portion 43 and the fibre 45 and suitably defined by chamfers on the ends of the folded sections of the alignment member 49.

The splice assembly is preassembled with the optical needle 41, and the optical fibre 46 arranged to enter the forward end 45 into the alignment member 49 substantially to abut the rearward end of the needle portion 43. The sleeve 48 is then crimped about the alignment member 49 to effect precise axial alignment between the fibre end 45 and the needle portion 43. Simultaneously the sleeve portion surrounding the support bushings 44 and 51 are similarly crimped and indented into the grooves 52 and 53 at annular indentations. This serves to exert an axial constraint against ends of the alignment member 49 during the crimping process, and also thereafter to protect against the effects of creep of the material of the alignment member and undesirable relaxation of its alignment function.

In forming the splice it has been found that the alignment member 49 should be of material having a fine grain size in the micron range, because rough grain size materials buckle the fibre during crimping by micro-bending causing undesirable transmission losses. Eutectic tin-lead alloy and so-called superplastic zinc have been found acceptable for grain size but suffer from creep in use, particularly with temperature cycling. A more satisfactory material is aluminium having a grain size of about 30 micron which does not suffer substantially from creep. A further material is super-plastic aluminium produced by the British Aluminium Company which has a grain size about 5 micron and is resistant to creep. Some rubbers form suitable materials and a rubber known as EPDM produced by the Dutch Company DSM, is suitable, having excellent resistance to creep. The bushings 44 and 51 are suitably of malleable metal, e.g. brass, and during crimping are urged axially inwards to exert axial constraint on the central alignment member 49. The indentation 60 serves to maintain that constraint after crimping to resist creep relaxation of the member 49.

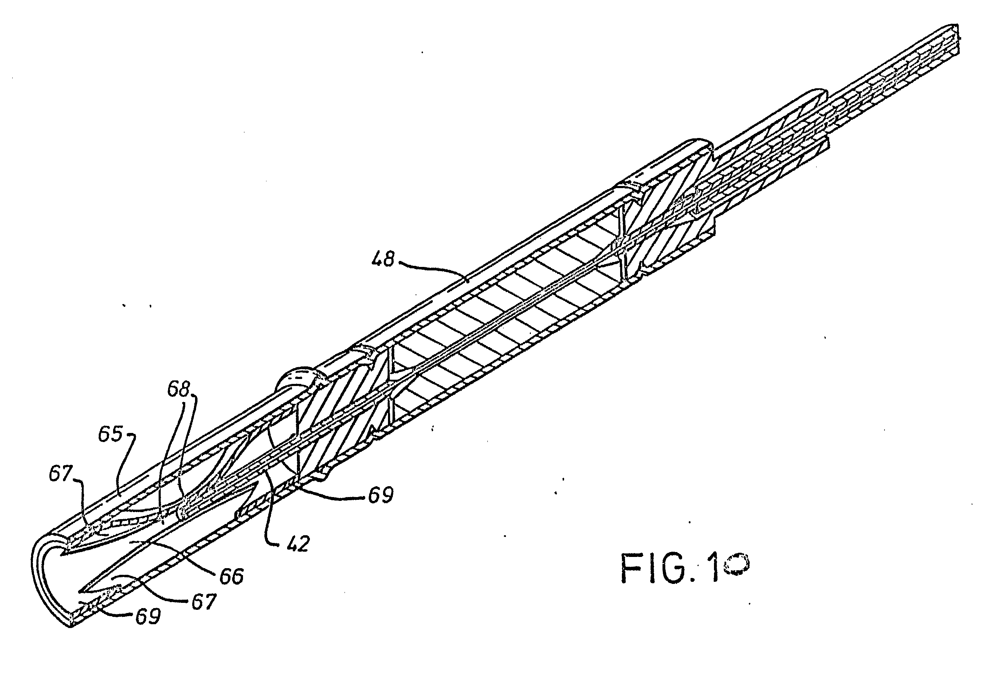

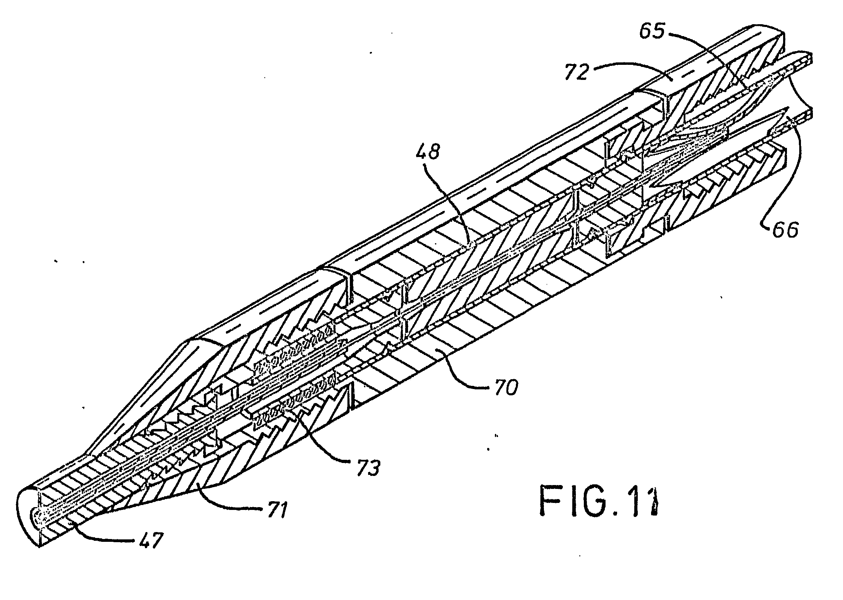

The male connector of Figure 8 is suitably mounted, as shown in Figure 9, in a cylindrical housing body 62, supporting the splice sleeve 48 and at its rearward end having a screw fitted cable clamp 43 for clamping the optical fibre cable 47 to the connector. At its forward end the housing body 62 has an externally threaded extension 64 formed with a bore surrounding the forwardly projecting needle part 42 and adapted to receive a complementary female connector to be described in connection with Figures 10 and 11.

The invention also includes the complementary female connector, as shown in Figure 10, which is similarly formed to the male connector described in connection with Figure 8, but the forward end of the sleeve 48 is extended at 65 forwardly beyond the needle support bushing 44 by substantially twice the length of the projecting needle portion 42. The sleeve extension 65 encases a resilient alignment member 66, defining a through passageway receiving the projecting needle portion 42. The alignment member 66 comprises a cylinder rolled up from a sheet metal blank, pushed with apertures 67 to define three spring arms 68 extending between cylindrical end portion 69 of the member 66, the arms being bowed inwardly to define, at a centre section of the member a constricted passageway of lesser diameter than the fibre portion 42, when in a relaxed condition. The cylindrical end portions 69 fit closely within the sleeve extension 65, and the forward end of needle portion 42 is resiliently clamped between the arms 68, at a mid-point of the alignment member 65.

As an alternative to the metal alignment member 66, an alignment member of resilient elastomeric material may be formed in the manner of the alignment member 10 of the splice of Figure 3, presenting a through passageway of diameter less than the thickened portion 42 of the optical needle so that on insertion of the needle into the passageway, resilient deformation of the alignment member takes place.

As shown in Figure 11, the female connector is suitably mounted in housing body 70 surrounding the splice section of the sleeve 48, and having at its rearward end a screw fitted cable clamp 71 for the optical cable 47. At its forward end, surrounding the sleeve extension 65, the housing 70 is formed with a rotatable coupling sleeve 72, internally threaded and radially spaced from the sleeve extension 65 to receive the threaded forward end 64 of the male connector of Figure 10. A biasing spring 73 is mounted within the housing 70 to bias the sleeve 48 forward, and to accommodate rearward movement thereof when the male and female connectors are mated.

On mating of the connectors of Figures 9 and 11, the projecting needle portion 42 of the male connector is entered into the alignment member 66 to be resiliently gripped by the spring 68 and centered with the needle of the female connector. As the coupling spring 72 is tightened on to the threaded male connector portion 64, the forward needle portions 42 are drawn into abutment and the spring 73 slightly compressed.

## Claims

1. A connector for terminating, an optical fibre comprising a tubular crimping sleeve (48) containing a resiliently deformable elongate alignment body (49) having a central alignment passage (50) for optical fibres (43, 45) characterised in that the crimping sleeve (48) extends beyond the alignment body (49) at opposite ends and a support bushing (44, 51) having a central fibre passageway is disposed within each end of the sleeve (48) adjacent the alignment body (49), each support bushing (44, 51) having a peripheral recess (52, 53) whereby on crimping the sleeve (48) about the alignment body (49) and the bushings (44, 51) the sleeve (48) may be indented (60, 61) into the recesses (52, 53) to secure the bushings (44, 51) in abutment with opposite ends of the alignment body (49) thereby placing the alignment body (49) under axial constraint.

2. A connector as claimed in claim 1, characterised in that the alignment body (49) is formed of material selected from the group comprising eutectic lead-tin alloy, super plastic zinc, aluminium of grain size of the order of 30 μm, super plastic aluminium having a grain size of the order of 5 μm and EPDM rubber.

3. A connector as claimed in claim 1 or claim 2, characterised in that the support bushings (44, 51) are of malleable metal such as brass.

4. A connector as claimed in any of claims 1 to 3, characterized in that the crimping sleeve (48) terminates adjacent the support bushing at one end whereby a coated optical fibre may be mounted in the fibre passageway of the support bushing (44) at that one end, the coated optical fibre (41) projecting outwardly on opposite sides of the support bushing (44), one end (42) projecting externally of the connector, the other end (43) projecting into the alignment passageway (50) of the alignment body (49).

5. A fibre optic female connector comprising a connector as claimed in any of claims 1 to 3, characterised in that the crimping sleeve (48) at one end (65) extends beyond the support bushing whereby a coated optical fibre (42) may be mounted in the fibre passageway of that support bushing, the coated fibre (42) projecting on opposite sides of the support bushing, one end projecting coaxially into the sleeve extension (65) and the other projecting into the alignment passageway of the alignment body, and including a resilient alignment member (66) for mounting in the sleeve extension (65) and having an alignment passageway for embracing the end of the coated fibre (42) within the sleeve extension (65) the alignment member (66) resiliently engaging the coated fibre (42) and having an alignment passageway portion extending away therefrom for reception of a complementary coated fibre.

## Patentansprüche

1. Verbinder zum Anschließen einer optischen Faser, mit einer rohrförmigen Quetschhülse (48), welche einen elastisch verformbaren länglichen Ausrichtkörper (49) enthält, der einen zentralen Ausrichtdurchgang (50) für optische Fasern (43, 45) aufweist, dadurch gekennzeichnet, daß die Quetschhülse (48) sich über den Ausrichtkörper an entgegengesetzten Enden hinauserstreckt und eine Tragbuchse (44, 51), welche einen zentralen Faserdurchgang aufweist, innerhalb jedes Endes der Hülse (48) angrenzend an den Ausrichtkörper (49) angeordnet ist, daß jede Tragbuchse (44, 51) eine Umfangsausnehmung (52, 53) besitzt, wodurch beim Aufquetschen der Hülse (48) auf den Ausrichtkörper (49) und die Buchsen (44, 51) die Hülse (48) in die Ausnehmungen (52, 53) eingekerbt werden kann, um die Buchsen (44, 51) anstoßend an entgegengesetzte Enden des Ausrichtkörpers (49) festzulegen, wodurch der Ausrichtkörper (59) axial gehalten wird.

2. Verbinder nach Anspruch 1, dadurch gekennzeichnet, daß der Ausrichtkörper (49) aus einem Material geformt ist, das aus der Gruppe gewählt ist, welche eine eutektische Blei-Zinn-Legierung umfaßt, ferner superplastisches Zink, Aluminium mit einer Korngröße in der Größenordnung von 30 µm, superplastisches Aluminium mit einer Korngröße in der Größenordnung von 5 µm und EPDM-Kautschuk.

3. Verbinder nach Anspruch 1 oder 2, dadurch gekennzeichnet, daß die Haltebuchsen (44, 51) aus kalt verformbarem Material, wie Messing bestehen.

4. Verbinder nach einem der Ansprüche 1 bis 3, dadurch gekennzeichnet, daß die Quetschhülse (48) angrenzend an die Haltebuchse an einem Ende endet, wodurch eine beschichtete optische Faser in dem Faserdurchgangsweg der Haltebuchse (44) an diesem Ende montiert werden kann, daß die beschichtete optische Faser (41) an entgegengesetzten Seiten der Haltebuchse (44) nach außen ragt, daß ein Ende (42) aus dem Verbinder herausragt, und daß das andere Ende (43) in den Ausrichtdurchgang (50) des Ausrichtkörpers (49) hineinragt.

5. Faseroptischer aufnehmender Verbinder mit einem Verbinder nach einem der Ansprüche 1 bis 3, dadurch gekennzeichnet, daß die Quetschhülse (48) an einem Ende (65) sich über die Haltebuchse hinauserstreckt, wodurch eine beschichtete optische Faser (42) in dem Faserdurchgang dieser Haltebuchse montiert werden kann, daß die beschichtete Faser (4) an entgegengesetzten Seiten der Haltebuchse weg ragt, daß ein Ende koaxial in die Hülsenverlängerung (65) hineinragt und das andere Ende in den Ausrichtdurchgang des Ausrichtkörpers hineinragt, und daß ein elastisches Ausrichtelement (66) zur Montage in der Hülsenverlängerung (65) vorgesehen ist und einen Ausrichtdurchgang zum Umgreifen des Endes der beschichteten Faser (42) innerhalb der Hülsenverlängerung (65) vorgesehen ist, wobei das Ausrichtelement (66) elastisch mit der beschichteten Faser (42) im Eingriff steht und einen Ausrichtdurchgangsabschnitt besitzt, der sich von ihm zur Aufnahme einer komplementären beschichteten Faser weg erstreckt.

## Revendications

1. Connecteur pour la terminaison d'une fibre optique, comprenant un manchon tubulaire (48) à sertir contenant un corps d'alignement allongé (49) déformable élastiquement ayant un passage central (50) d'alignement pour des fibres optiques (43, 45), caractérisé en ce que le manchon à sertir (48) s'étend au-delà du corps d'alignement (49) aux extrémités opposées, et une douille de support (44, 51), ayant un passage central de fibres, est disposée dans chaque extrémité du manchon (48) à proximité immédiate du corps d'alignement (49), chaque douille du support (44, 51) présentant un évidement périphérique (52, 53) de manière que, lors du sertissage du manchon (48) autour du corps d'alignement (49) et des douilles (44, 51), ; le manchon (48) puisse être enchâssé (60, 61) dans les évidements (52, 53) pour fixer les douilles (44, 51) en butée avec des extrémités opposées du corps d'alignement (49), plaçant ainsi le corps d'alignement (49) sous une contrainte axiale.

2. Connecteur selon la revendication 1, caractérisé en ce que le corps d'alignement (49) est formé en une matière choisie dans le groupe comprenant un alliage eutectique plomb-étain, du zinc super-plastique, de l'aluminium d'une dimension de grain de l'ordre de 30 µm, de l'aluminium super-plastique ayant une dimension de grain de l'ordre de 5 mm et du caoutchouc EPDM.

3. Connecteur selon la revendication 1 ou la revendication 2, caractérisé en ce que les douilles (44, 51) de support sont en un métal malléable tel que du laiton.

4. Connecteur selon l'une quelconque des revendications 1 à 3, caractérisé en ce que le manchon à sertir (48) se termine à proximité immédiate de la douille de support à une extrémité afin qu'une fibre optique revêtue puisse être montée dans le passage de fibre de la douille (44) de support à cette extrémité, la fibre optique revêtue (41) faisant saillie vers l'extérieur sur les côtés opposés de la douille (44) de support, une extrémité (42) faisant saillie vers l'extérieur du connecteur, l'autre extrémité (43) faisant saillie vers l'intérieur du passage d'alignement (50) du corps d'alignement (49).

5. Connecteur femelle optique pour fibres comprenant un connecteur selon l'une quelconque des revendications 1 à 3, caractérisé en ce que le manchon à sertir (48) s'étend, à une extrémité (65), au-delà de la douille de support afin qu'une fibre optique revêtue (42) puisse être montée dans le passage de fibre de cette douille de support, la fibre revêtue (42) faisant saillie sur des côtés opposés de la douille de support, une extrémité faisant saillie coaxialement à l'intérieur du prolongement (65) du manchon et l'autre extrémité faisant saillie à l'intérieur du passage d'alignement du corps d'alignement, et comprenant un élément élastique d'alignement (66) destiné à être monté dans le prolongement (65) du manchon et ayant un passage d'alignement destiné à entourer l'extrémité de la fibre revêtue (42) à l'intérieur du prolongement (65) du manchon, l'élément d'alignement (66) établissant une prise élastique sur la fibre revêtue (42) et ayant un tronçon de passage d'alignement qui s'en éloigne pour recevoir une fibre revêtue complémentaire.

FIG.1

FIG.2

FIG.3

FIG.4

FIG. 5

FIG.6

EP 0 201 944 B1

FIG.7

FIG. 8

FIG. 9

EP 0 201 944 B1

FIG. 10

FIG. 11

EP 0 201 944 B1